(19)

Europäisches
Patentamt
European
Patent Office
Office européen
des brevets

(11) **EP 3 457 594 A1**

(12) **EUROPEAN PATENT APPLICATION**

(43) Date of publication:
**20.03.2019 Bulletin 2019/12**

(51) Int Cl.:
*H04B 10/2507* (2013.01)    *H04B 10/58* (2013.01)

(21) Application number: **17191040.9**

(22) Date of filing: **14.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Xieon Networks S.à r.l.**
**2633 Senningerberg (LU)**

(72) Inventors:
- **Calabrò, Stefano**
  **81375 Munich (DE)**
- **Rapp, Lutz**
  **82041 Deisenhofen (DE)**
- **Spinnler, Bernhard**
  **82041 Oberhaching (DE)**

(74) Representative: **Kretschmann, Dennis**
**Boehmert & Boehmert**
**Anwaltspartnerschaft mbB**
**Pettenkoferstrasse 22**
**80336 München (DE)**

(54) **A METHOD AND SYSTEM FOR DETERMINING A MODEL REPRESENTATION FOR AN OPTICAL TRANSMITTER**

(57)    A method for determining a model representation for an optical transmitter comprises determining a quantity of a subsequence of output signals of an optical transmitter, the output signals being emitted in response to a sequence of input signals provided to the optical transmitter, and determining a model representation for the optical transmitter based on the determined quantity, wherein the quantity only represents a part of the information encoded in the subsequence of the output signals.

Fig. 1

## Description

### Field of the Invention

The present disclosure relates to transmitters for optical data transmission, in particular to adaptive pre-distortion for optical transmitters.

### Background

The main drivers for the evolution of optical transmission systems have constantly been the need to improve the capacity of the telecommunication infrastructure and, at the same time, the urge to reduce the cost per bit. In terms of optical transponder technology, these trends currently translate into the adoption of high-order modulation formats with high-spectral efficiency, increase of the signaling rate and the replacement of traditional discrete optical components by integrated components.

Modern transponders make use of phase modulation (for example binary phase-shift keying (BPSK) or quadrature phase-shift keying (QPSK)) or a combination of phase and amplitude modulation (for example quadrature amplitude modulation (QAM)). Commonly, the resulting optical signals are not described by their amplitude and their phase, but rather by two orthogonal components, namely the in-phase component and the quadrature component. However, both representations are equivalent and the representation in one system of coordinates can be transferred into a representation in the other system of coordinates. Additionally, two orthogonal polarizations of the light are used to convey two independent QAM (or phase-modulated) signals or, alternatively, the two-dimensional projections of a four-dimensional signal.

For instance, the next generation of optical transponders is expected to support 64-point dual polarization quadrature amplitude modulation (64 QAM) at roughly 64 Gigasymbols per second, employing integrated transmitters and receivers realized, e.g., in silicon photonics technology.

The combined use of high signaling rates, high-order modulation formats and integrated photonics makes it a serious challenge to achieve the required transmission quality. On the one hand, high signaling rates may result in bandwidth limitations in the optical and electronic components. On the other hand, high-order modulation formats are very sensitive to any type of linear or nonlinear distortion. In conjunction with the trend towards integrated photonic solutions, the situation becomes even worse due to the fact that integrated optical devices have not yet achieved the performance of their discrete counterparts.

State-of-the-art adaptive receivers can effectively compensate transmission impairments, but they can be overwhelmed if the quality of the transmit signal is excessively degraded. It is therefore important to implement high-fidelity transmitters.

Device manufacturers have constantly tried to limit the imperfections of the electronic and photonic components of optical transmitters. This is certainly a very reasonable aspiration, but the approach is subject to a price/quality trade-off and can result in unnecessarily expensive components.

Static digital pre-distortion based on factory calibration has been proposed by A. Napoli et al., "Novel DAC Digital Pre-Emphasis Algorithm for Next-Generation Flexible Optical Transponders", published in the Proceedings of the 2015 Optical Fiber Communication Conference (OFC 2015), Los Angeles, California, March 22 - March 26, 2015. However, calibration is time-consuming and thus impacts heavily the production costs. Further, calibration is unsuitable for systems assembled during installation via pluggable components.

In their research paper "Low-Cost Transmitter Self-Calibration of Time Delay and Frequency Response for High Band-Rate QAM Transceivers", Proceedings of the 2017 Optical Fiber Communication Conference (OFC 2017), Los Angeles, California, March 19 - March 23, 2017, C.R. Fludger *et al*. describe a transmitter calibration method using swept frequency tones and a single feedback photodiode. However, this method estimates only transmitter frequency response and skew, and requires the transmission of special signals for calibration purposes.

G. Khanna et al. in their paper "A Robust Adaptive Pre-Distortion Method for Optical Communication Transmitters", IEEE Photonics Technology Letters, Vol. 28, No. 7, pages 752-755 (April 2015) describe an adaptive pre-distortion based on an auxiliary coherent receiver. This solution avoids the need for factory calibration, but requires an expensive and relatively bulky auxiliary receiver, which may impact the transponder cost and size.

In view of these problems, what is needed is a reliable and cost-efficient technique to improve the transmission quality of an optical transmitter.

### Overview

This objective is achieved with a method and system for determining a model representation for an optical transmitter according to independent claims 1 and 13, respectively. The dependent claims relate to preferred embodiments.

A method for determining a model representation for an optical transmitter according to the disclosure comprises: determining a quantity of a subsequence of output signals of an optical transmitter, the output signals being emitted in response to a sequence of input signals provided to the optical transmitter; and determining a model representation for the optical transmitter based on the determined quantity, wherein the quantity only represents a part of the information encoded in the subsequence of the output signals.

The model representation for the optical transmitter may be employed to detect and understand transmission errors of the optical transmitter that may lead to signal distortions. In particular, based on knowledge of the model representation for the optical transmitter, the optical transmitter may be corrected to improve the transmission quality.

The quantity of the subsequence of output signals may be any property or characteristic of the subsequence of output signals that is susceptible to physical measurement or detection.

However, the quantity may not provide the complete information encoded in the subsequence of the output signals. In particular, the quantity may not allow in itself to decode the output signals. For instance, the quantity may not allow to unambiguously determine the sequence of input signals provided to the optical transmitter. This may require the analysis of further parameters of the subsequence of output signals.

The inventors found that the determined quantity, even if it only represents a part of the information encoded in the subsequence of the output signals, may nevertheless allow to reliably determine a model representation for the optical transmitter. Hence, the model representation may be determined without the use of sophisticated equipment.

According to an embodiment, the transmitter encodes information in at least one polarization either in phase or in a combination of amplitude and phase.

According to an embodiment, the quantity pertains to a power or an intensity of the subsequence of output signals.

Determining the model representation for the optical transmitter based on the power or intensity determined from the subsequence of output signals allows for a reliable assessment and representation of the optical transmitter. At the same time, determining the power or intensity of the transmitter output does not require sophisticated equipment. It is a realization of the inventors that the model representation may be determined solely from the determined power or intensity, without relying on a coherent receiver, and may still provide a reliable model representation for the optical transmitter.

Intensity, in the sense of the present disclosure, may refer to a power transferred by unit area. The area may be governed by a geometry of an optical fiber, or by a geometry of a detector employed for determining the quantity. The area may be constant, or approximately constant. In this sense, the power and the intensity may be considered equivalent quantities in the context of the present disclosure.

The term power, in the sense of the present disclosure, may further comprise quantities equivalent to a power or intensity of the subsequence of output signals. For instance, the power of an optical signal is directly related to an amplitude of its electrical field or magnetic field. Hence, determining the amplitude can be considered determining the power in the sense of the present disclosure, and vice-versa.

In an embodiment, the only physical parameter of the subsequence of output signals used for determining the model representation is the determined power or intensity, respectively.

In an example, determining the quantity may comprise detecting the quantity of the subsequence of output signals.

The quantity, such as the power or intensity may be determined by means of an intensity photo-detector.

According to an embodiment, the model representation may be determined based on the determined quantity, and may additionally be based on a model of an intensity photo-detector and/or a feedback receiver.

According to an example, the model representation may not be based on determining polarization information and/or phase information of the output signals.

In some examples, the subsequence of output signals may comprise all optical signals emitted by the optical transmitter in response to the sequence of input signals. In these instances, the subsequence can be considered an improper subsequence, and may be referred to as the sequence of output signals.

However, it is an advantage of the techniques of the present invention that the model representation for the optical transmitter may also be based on the intensity determined only for a (small) portion of the optical transmit signals, or only for a partial signal such as a signal pertaining only to one of a plurality of polarization states. In particular, the techniques of the present invention may not require a full alias-free spectral representation of the transmission intensity, but only sparse samples which can be conveniently acquired by means of a low-speed digitizer.

Hence, in an example, the subsequence comprises only a subset of optical signals emitted by the optical transmitter in response to the input signals.

In these instances, the subsequence can be considered a proper subsequence, in the sense that it corresponds to a subset or partial set of optical signals emitted in response to the sequence of input signals.

In general terms, the subsequence may represent a time-limited subsequence of the output signals emitted by the optical transmitter, and/or may correspond to a single or a plurality of tributaries of the optical signals.

In an embodiment, determining the model representation comprises an optimization, in particular a least squares optimization.

In an embodiment the model representation may model a skew and/or a delay of the input signals as they are passed through the optical transmitter.

According to an example, determining the model representation may comprise minimizing an output power of the optical signals.

Minimizing the output power of the optical signals requires only relatively modest computational and memory resources, and can still yield a reliable model representation for an optical transmitter, in particular an optical transmitter causing a skew and/or a delay of the input signals.

An optical transmitter, in the sense of the present disclosure, may refer to any optical transmission unit in an optical network, such as a transmission unit that converts an input data stream into an optical signal, or a sequence of optical signals. It may be modeled as an optical transmission channel. The output signals of the optical transmitter may be signals transmitted via an optical transmission line, such as through an optical fiber cable.

In an example, the output signals are optical analog signals.

The input signals, in the sense of the present disclosure, may refer to any kind of input signals of the optical transmitter that trigger the optical transmitter to output the output signals in response to the input signals.

In an embodiment, the input signals may be digital data signals or electrical analog signals.

In particular, the input signals may be digital data signals that correspond to or represent output signals that a user may want to generate and transmit. In this instance, the optical transmitter should ideally correspond to an ideal digital-to-analog converter channel. However, due to imperfections, the optical transmitter may divert from this ideal, and may introduce signal distortions that may affect the quality of the output signals. The model representation for the optical transmitter may model these imperfections.

In an embodiment, determining a model representation may comprise providing an ansatz model representation comprising at least one parameter, and determining the at least one parameter based on the determined quantity.

In general, the ansatz may comprise a plurality of parameters, and determining the model representation may comprise determining the plurality of parameters.

The inventors found that providing the ansatz allows for a computationally efficient determination of the model representation that allows to reliably capture a large variety of possible signal distortions.

In an embodiment, the model representation or ansatz comprises a linear combination of a set of base functions.

For instance, the base functions may comprise a set of single-component base functions, wherein each of the single-component base functions has a non-zero projection only on one of a plurality of baseband components of the input signals.

The base functions may alternatively or additionally comprise a set of delay functions, wherein the delay functions model linear filters for a plurality of baseband components of the input signals.

In an example, the base functions are polynomial functions, and may correspond to a Volterra model for the optical transmitter.

In an example, the method may further comprise providing the sequence of input signals to the optical transmitter.

The method may also comprise receiving the corresponding subsequence of output signals from the optical transmitter.

According to an embodiment, the method may comprise determining a pre-distortion map from the model representation.

The pre-distortion map may be employed to correct distortions of the optical transmitter so to enhance the signal quality of the output signal.

The pre-distortion map may correspond to a channel upstream of the optical transmitter.

In an example, the pre-distortion map is based on an inverse of the model representation. In particular, the pre-distortion map may correspond to an inverse of the model representation or may approximate an inverse of the model representation.

According to an embodiment, the method may further comprise submitting the input signals to the pre-distortion map prior to the optical transmitter; and/or submitting output signals of the pre-distortion map to the optical transmitter.

According to an embodiment, the method comprises adjusting the model representation and/or the pre-distortion map based on output signals of the optical transmitter.

This may allow to adapt the model representation and/or the pre-distortion map during operation of the optical transmitter, such as to accommodate temperature effects or aging of the optical transmitter.

In an example, the adjusting comprises iteratively adjusting the model representation and/or the pre-distortion map based on output signals of the optical transmitter.

In particular, the model representation and/or the pre-distortion map for a second sequence of input signals for the optical transmitter may be adjusted based on a determined quantity of a subsequence of output signals of the optical transmitter, the output signals corresponding to a first sequence of input signals, the first sequence of input signals preceding the second sequence of input signals.

According to an example, the adjusting may comprise comparing output signals of the pre-distortion map with output signals of the optical transmitter.

This may provide for an efficient feedback correction mechanism for the optical transmitter.

The output signals of the pre-distortion map may undergo a signal processing prior to comparison with the output signals of the optical transmitter. In particular, signal processing may comprise submitting the output signals to a map corresponding to the model representation for the optical transmitter and/or to a map corresponding to an intensity photo-detector and/or a feedback receiver receiving the output signals of the optical transmitter.

According to an embodiment, the sequence of input signals may comprise signals of a plurality of optical polarization states.

The polarization states may be polarization planes or polarization directions, or may reflect any other property of the polarization.

Determining a model representation for the optical transmitter may comprise determining a first model representation corresponding to a first polarization state, and determining a second model representation corresponding to a second polarization state different from the first polarization state.

The techniques according to the embodiment may allow for a particularly efficient model generation in configurations in which the optical transmitter can be regarded or can be approximated as the combination of independent component transmitters for different polarization states.

In an example, the second model representation may be different from the first model representation.

In another example, the second model representation may be equal, or approximately equal to the first model representation.

In the latter example, the optical transmitter may transmit simultaneously signals of the first polarization state and the second polarization state, and a feedback receiver may alternatively sample the two polarization states.

The optical transmitter may be conveniently modeled in terms of a single polarization transmitter that may be used alternatively to transmit signals of the first and second polarization directions, such as by alternating between signals of the first and second polarization planes.

The disclosure further relates to a computer program or to a computer program product comprising computer-readable instructions that are adapted to implement, when processed on a computer, a method with some or all of the features described above.

The disclosure further relates to a system for determining a model representation for an optical transmitter, comprising: a determination unit adapted to determine a quantity of a subsequence of output signals of an optical transmitter, the output signals being emitted in response to a sequence of input signals provided to the optical transmitter; and an analysis unit adapted to determine a model representation for the optical transmitter from the determined quantity; wherein the quantity only represents a part of the information encoded in the subsequence of the output signals.

In some examples, the determination unit and the analysis unit may be separate units.

In other examples, the determination unit and the analysis unit may be implemented as a common unit.

According to an embodiment the determination unit may comprise a detection unit adapted to detect the quantity of the subsequence of output signals, and may in particular comprise an intensity photo-detector.

The system may further comprise an input unit adapted to provide the sequence of input signals to the optical transmitter.

The system may further comprise a receiving unit adapted to receive the corresponding sequence of output signals from the optical transmitter.

The receiving unit may be further adapted to provide the sequence of output signals to the determination unit.

According to an embodiment, the analysis unit may be adapted to determine a pre-distortion map from the model representation.

The system may further comprise a pre-distortion unit upstream of the optical transmitter, wherein the pre-distortion unit implements the pre-distortion map.

Hence, the pre-distortion unit may be a signal processing unit or channel that is a realization of the pre-distortion map, or an approximation of the pre-distortion map.

The pre-distortion unit may be a data processing unit, in particular a data processing unit processing digital signals.

The pre-distortion unit may be a separate unit, or may be incorporated into the optical transmitter.

In an example, the analysis unit is adapted to adjust the model representation and/or the pre-distortion unit based on output signals of the optical transmitter.

According to an example, the analysis unit may be communicatively coupled to the pre-distortion unit.

According to an embodiment, the analysis unit may be adapted to compare output signals of the pre-distortion unit with output signals of the optical transmitter.

In an example, the system for determining the model representation may further comprise a model unit for the optical transmitter adapted to receive a subsequence of the output signals of the pre-distortion unit and adapted to submit the subsequence or a subsequence derived therefrom to a model of the optical transmitter.

According to an embodiment, the system for determining the model representation may further comprise a model unit for modeling the determination unit.

For instance, the model unit for the determination unit may receive output signals from the model unit for the optical transmitter, and may be adapted to submit these signals - preferably after processing them - to a model for the determination unit.

Output signals from the model unit for the determination unit may be provided to the analysis unit.

The analysis unit may determine the model representation for the optical transmitter based on the output from the model unit for the optical transmitter and/or the output from the model unit for the determination unit, such as by means of a comparison with output signals from said determination unit.

Detailed Description

The features and numerous advantages of the method and system according to the invention may be best understood from a detailed description of specific embodiments with reference to the accompanying drawings, in which:

Fig. 1            is a schematic illustration of a system for determining a model representation for an optical transmitter according to an embodiment;

Fig. 2            is a flow diagram illustrating a method for determining a model representation for an optical transmitter according to an embodiment;

Fig. 3            is a schematic illustration of a system for determining a model representation for an optical transmitter comprising a pre-distortion unit according to an embodiment;

Fig. 4            is a schematic illustration of a system for determining a model representation for an optical transmitter comprising per-polarization, pre-distortion units according to an embodiment;

Fig. 5            is a schematic illustration of a system for adaptive pre-distortion according to an embodiment;

Fig. 6            is a schematic illustration of a system for adaptive pre-distortion comprising per-polarization processing according to an embodiment;

Fig. 7            is a schematic illustration of a system for delay identification based on correlation and corresponding adaptive pre-distortion according to an embodiment;

Fig. 8            is a schematic constellation diagram illustrating an optimization technique according to an embodiment;

Figs. 9a to 9c    represent constellation diagrams in the presence of skew to illustrate an optimization technique according to an embodiment;

Fig. 10           is a schematic diagram illustrating the detection of minimum instantaneous power in an optimization technique according to an embodiment;

Fig. 11a, 11b     show a probability density function and cumulative probability distribution of the amplitude values for different skew values and various noise levels according to an embodiment;

Fig. 12           illustrates the implementation of an adaptive digital pre-distortion technique in a pluggable module according to an embodiment; and

Figs. 13a, 13b    are a schematic illustration of the details of a pluggable module as illustrated in Fig. 11 according to an embodiment.

Examples of a method and system for determining a model representation for an optical transmitter will now be described with reference to optical transmitters as they may be employed in an optical communication network. These optical transmitters may convert a sequence of data inputs, such as digital data inputs, into a sequence of optical signals, and may feed the optical signals into an optical fiber channel. Although reference is made to a plurality of output signals or optical signals, the invention is of course also applicable to configurations with a single output signal.

The techniques of the present disclosure apply generally to any optical transmitter providing a sequence of optical signals.

In the following embodiments, sequences of power samples are determined that capture at least partially the evolution of the optical power over time. In order to distinguish the measured power levels from the average power of the optical signal, we will denote the sampled power values as instantaneous power. However, it is not required to capture all features of the optical power. For example, suppressing some frequencies by low pass filtering does not per se restrict the applicability of the technique. Such filtering is not necessarily intended - it might just be caused by the limited bandwidth of the used electrical filter.

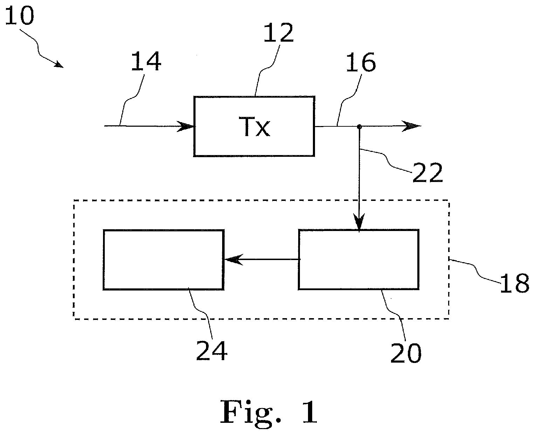

Fig. 1 is a schematic illustration of an optical transmission system 10 in the context of which the techniques according to the present invention may be employed. The system 10 comprises an optical transmitter 12 receiving a sequence of electrical analog or digital input signals 14 and converting them into a sequence of optical output signals 16. For instance, the input signals 14 may be digital data signals, and the optical output signals 16 may be analog optical signals generated by the optical transmitter 12 in response to the input signals 14 and may be fed into an optical network (not shown).

The optical transmitter 12 may comprise data processing equipment adapted to receive and process the input signals 14, as well as lasers, optical filters or other optical equipment to generate the optical output signals 16 in response to receiving the input signals 14. Mathematically, the optical transmitter 12 may be modeled as a channel.

The optical transmission system 10 further comprises a system 18 for determining a model representation for the optical transmitter 12. The system 18 comprises a determination unit 20 adapted to receive a test sequence 22 of optical output signals tapped from the optical output signals 16. The test sequence 22 may correspond to a subsequence of the output signals 16 generated by the optical transmitter 12 in response to receiving a sequence of input signals 14.

The determination unit 20 determines an intensity of the output signals in the test sequence 22. In particular, the determination unit 20 may comprise a detection unit (not shown in Fig. 1) adapted to detect the intensity of the optical signals in the test sequence 22, such as an intensity photo-detector.

The system 18 further comprises an analysis unit 24 communicatively coupled to the determination unit 20. The analysis unit 24 is configured to determine a model representation for the optical transmitter 12 based on the intensity detected by the determination unit 20. The model representation may correspond to a description or mathematical representation of the functionality of the optical transmitter 12.

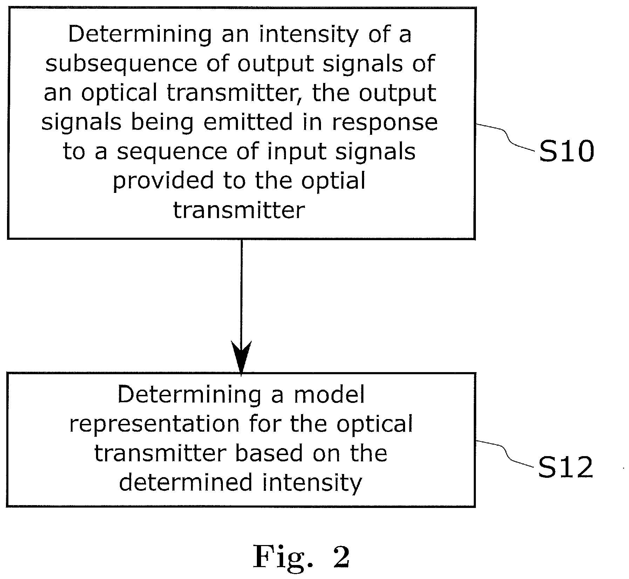

A method according to an example for determining a model representation for an optical transmitter is schematically illustrated in the flow diagram of Fig. 2.

In a first step S10, an intensity of a subsequence of output signals of an optical transmitter, such as the optical transmitter 12 is determined, wherein the output signals are being emitted in response to a sequence of input signals provided to the optical transmitter.

In a subsequent step S12, a model representation for the optical transmitter is determined based on the determined intensity.

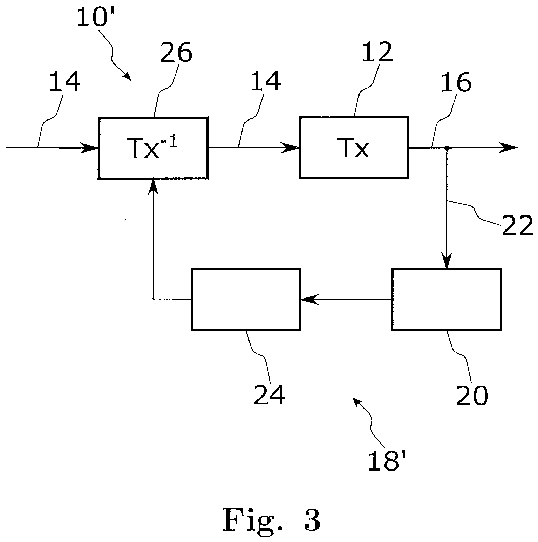

The determined model representation may be employed to correct signal distortions that may result from inaccuracies or malfunctions of the optical transmitter 12, as will now be described in greater detail with reference to Figs. 3 to 13.

For instance, the optical transmitter 12 may be designed to convert digital data input signals 14 to a sequence of optical output signals 16 that are a faithful representation of the digital input signals 14. However, due to imperfections or detrimental environmental influences, the optical transmitter 12 may introduce signal distortions such as differential signal delays or noise and hence may divert from the ideal channel. The techniques according to the present invention may be employed to correct for these imperfections and thereby enhance the signal quality of the output optical signals 16.

A corresponding configuration is schematically illustrated in Fig. 3, which illustrates an optical transmission system 10' and a system 18' for determining a model representation that generally correspond to the optical transmission system 10 and system 18 described above with reference to Fig. 1, and the same reference numerals are used to designate corresponding elements.

However, as can be taken from Fig. 3, the system 10' in addition comprises a pre-distortion unit 26 upstream of the optical transmitter 12. The pre-distortion unit 26 is implemented based on the model representation determined by the analysis unit 24, and may correspond to an inverse characteristics of the optical transmitter 12, or may approximate an inverse of the transfer function of the optical transmitter 12. Hence, when inserted into the data stream of the input signals 14, the pre-distortion unit 26 may fully or partially compensate for signal distortions of the optical transmitter 12 so that the signal quality of the optical output signal 16 is enhanced. In other words, the concatenation of the pre-distortion unit 26 correcting distortions caused by the optical transmitter 12 and the optical transmitter 12 may represent or approximate an ideal optical transmitter.

The model representation may be adapted to account for parts of the modulator imperfections only. For example, it might be sufficient to take only the most dominant effects into account. In this case, the concatenation of the pre-distortion unit 26 correcting distortions caused by the optical transmitter 12 and the optical transmitter 12 represents a non-ideal optical transmitter providing better performance as compared with the optical transmitter 12 without any compensation of non-ideal characteristics.

The schematic illustration of Fig. 3 shows the pre-distortion unit 26 and the optical transmitter 12 as separate units. However, this is a mere example, and in other embodiments the pre-distortion unit 26 may be integrated into the optical transmitter 12.

In addition, the input signals may undergo usual data processing before entering the pre-distortion unit 26, such as encoding, bit-to-symbol mapping, and pulse shaping.

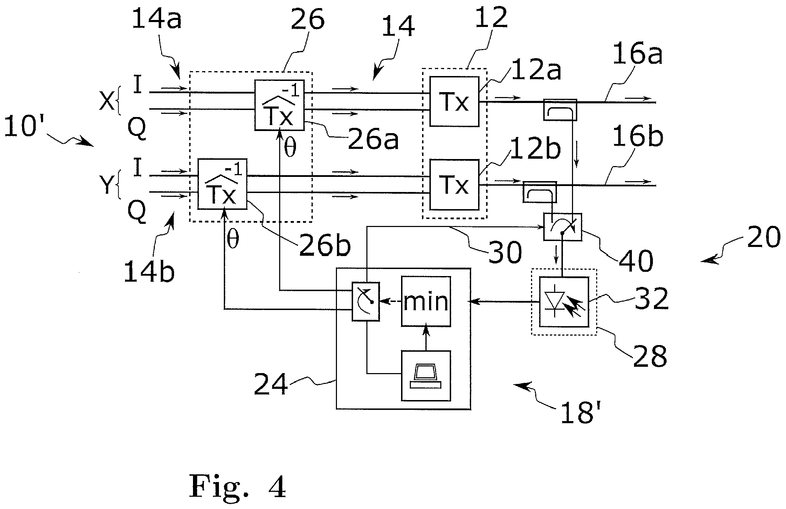

Fig. 4 is a schematic illustration of the optical transmission system 10' and system 18' for determining a model representation as generally described above with reference to Fig. 3, but in a configuration in which the optical input signals are split up into in-phase (I) and quadrature (Q) components of a complex baseband signal for two orthogonal polarization directions X, Y.

As can be further taken from Fig. 4, the optical transmitter 12 may process the input signals 14a, 14b corresponding to the X and Y polarization per polarization with corresponding optical transmitter units 12a, 12b to generate corresponding optical output signals 16a, 16b.

A combiner unit (not shown) may combine the optical output signals 16a, 16b corresponding to the two orthogonal polarization directions into a common output signal.

The determination unit 20 may comprise a selector unit 40 that may be represented by an optical switch that receives control signals via a control line 30 from the analysis unit 24 and taps optical output signals 16a, 16b of both polarization directions as instructed by the analysis unit 24.

The determination unit 20 further comprises a feedback receiver 28 with an intensity photo-detector 32 that receives the tapped output signals from the selector unit 40 and measures an intensity of the subsequence of output signals 16a, 16b.

Based on the results from the intensity photo-detector 32, the analysis unit 24 determines a model representation for the optical transmitters 12a, 12b. As described in detail further below, determining the model representation may involve ansatz and optimization techniques.

Based on the determined model representation, a pre-distortion unit 26 may then be implemented in the input path upstream of the optical transmitters 12a, 12b, respectively. In the simplified scenario shown in Fig. 4 in which the transmitter 12 factorizes into pre-polarization transmitter subunits 12a, 12b, the pre-distortion unit may likewise be implemented as a pair of pre-distortion units 26a, 26b for the respective polarization directions X, Y. In particular, the pre-distortion units 26a, 26b may correspond to inverses of the corresponding optical transmitters 12a, 12b, respectively, or approximate inverses of the optical transmitters 12a, 12b. In this way, the undesired signal distortions caused by the optical transmitters 12a, 12b may be corrected polarization-wise in each of the two polarization branches, similarly to the configuration described above with reference to Fig. 3.

Before providing more details, a summary of possible implementations for polarization multiplexed signals is provided. Such polarization multiplexed signals (in short form polmux signals) simultaneously transmit independent data streams in both polarization planes.

In general form, a pre-distortion unit 26 may receive four tributary signals and may determine - by processing these four tributary signals - four pre-distorted output signals that are provided pairwise to the IQ modulators. The model representation used by the pre-distortion unit 26 can be determined from the power of the polarization multiplex signals, i.e. from the total output power. Therefore, part of the output signal is tapped off after combining the polarization component forming the final output signals for determining the total power. Alternatively, parts of the output signals may be branched off after each IQ modulator. In the following, these parts may be combined either optically or after opto-electronic conversion of both output signals electrically in order to determine the total intensity.

In case the model representation does not link output signals assigned to one polarization to input tributary signals of the other polarization, the pre-distortion unit 26 can be structured into two independently acting pre-distortion units 26a and 26b, although the pre-distortion model representations used by each of these independently acting pre-distortion units 26a and 26b are determined from the total power of the polarization multiplex signal.

In a further embodiment, the model representations used by the independently acting pre-distortion units 26a and 26b are each determined from power levels measured for the corresponding polarization plane. Thus, the determination of the model representations and the processing of the tributary signals are completely independent from each other for the two polarization planes. This is for example a suitable approach for compensating for the skew between the in-phase component and the quadrature component of the same polarization.

Finally, it is also possible to determine the power for each polarization independently, i.e. in front of a polarization beam combiner, but by using a pre-distortion unit 26 acting on the tributaries of both polarization planes.

Steps related to a single polarization only can be performed in parallel by doubling the required equipment. Alternatively, the steps can also be performed sequentially by sharing the same devices and by providing signals from the two polarizations to the devices by means of electrical or optical switches in an alternating way.

In contrast to some of the prior-art solutions, the techniques of the present disclosure do not require complete knowledge of the output of the optical transmitter 12, or even a segment thereof, which might require a coherent receiver. Instead, the techniques of the present disclosure may make use of solely the detected intensity of the transmitter output, which may not contain direct information about the polarization and phase modulation. Moreover, the required "observable" signal can be obtained by tapping only a small portion of the optical output signals 16. Further, the techniques of the present disclosure do not require a full alias-free spectral representation of the transmit intensity, but only sparse samples, which can be conveniently acquired via a low-speed digitizer.

With reference to Figures 3 and 4, the digital input signals 14 to the optical transmitter 12 comprising the pair of optical transmitter units 12a, 12b may be represented by a time sequence of vectors

$$\boldsymbol{v} = [\boldsymbol{v}[0] \quad \boldsymbol{v}[1] \quad \cdots \quad \boldsymbol{v}[N_v - 1]], \qquad (1)$$

where

$$\boldsymbol{v}[i] = \begin{bmatrix} v_{XI}[i] \\ v_{XQ}[i] \\ v_{YI}[i] \\ v_{YQ}[i] \end{bmatrix} \quad (i = 0, 1, \ldots, N_v - 1) \qquad (2)$$

gathers the samples of the real baseband signals transmitted at the i-th time instant over in-phase and quadrature components (*I*/*Q*) of the two orthogonal polarizations (*X*/*Y*).

The tapped samples collected by the feedback receiver 28 correspond to a subsequence of output signals 16 that may be represented as follows:

$$[r[0] \quad r[1] \quad \cdots \quad r[N_r - 1]]. \qquad (3)$$

The transmitter 12 may be modeled in the equivalent baseband representation by the function $\mathbf{f}_\theta \colon \mathbb{R}^{4 \times N_v} \to \mathbb{R}^{4 \times N_v}$, which depends on the unknown parameter vector $\theta$ and represents an ansatz for the model representation. Some examples are discussed further below. The output of the transmitter model is represented by

$$\boldsymbol{w}_\theta = [\boldsymbol{w}_\theta[0] \quad \boldsymbol{w}_\theta[1] \quad \cdots \quad \boldsymbol{w}_\theta[N_v - 1]], \qquad (4)$$

where

$$\boldsymbol{w}_\theta = \mathbf{f}_\theta(\boldsymbol{v}) \qquad (5)$$

and

$$\boldsymbol{w}_\theta[i] = \begin{bmatrix} w_{XI,\theta}[i] \\ w_{XQ,\theta}[i] \\ w_{YI,\theta}[i] \\ w_{YQ,\theta}[i] \end{bmatrix} \quad (i = 0, 1, \ldots, N_v - 1). \qquad (6)$$

The identification of the model consists in finding the parameter vector $\theta$ that results in the "best" estimate of the transmitter characteristics.

As already mentioned, the observable is a ("lossy") function of the transmit signal, obtained through the determination unit 20 comprising the feedback receiver 28 with the intensity photo-detector 32. Therefore, in order to identify $\theta$, we pass the output $\omega$ of the transmitter model through the model of the determination unit 20 and we proceed by fitting the resulting signal to the observable r. We may model the determination unit 20 in the equivalent baseband representation by a function $\mathbf{g}\colon \mathbb{R}^{4\times N_v} \to \mathbb{R}^{N_r}$. Thus, the output of the receiver model

$$s_\theta = [s_\theta[0] \quad s_\theta[1] \quad \cdots \quad s_\theta[N_r - 1]] \tag{7}$$

is expressed as

$$s_\theta = \mathbf{g}(w_\theta) = \mathbf{g}(\mathbf{f}_\theta(v)). \tag{8}$$

The optimal parameter vector in the least squares sense may be determined as follows:

$$\hat{\theta} = \arg\min_\theta [r - \mathbf{g}(\mathbf{f}_\theta(v))]^2. \tag{9}$$

Literally speaking, the method selects the parameter vector $\hat{\theta}$ mapping the input time sequence of vectors v to output values of the receiver model r in such a way that the tapped samples collected from the feedback receiver 28 are approximated in a least mean square sense. The receiver model comprises models of the transmitter and the determination unit. Of course, any known kind of approximation criterion can be used instead of the least man square criterion.

Once the model representation is identified, the digital pre-distortion (DPD) unit 26 may be configured to apply the inverse function $\mathbf{f}_\theta^{-1}$ or an approximation thereof to the digital representation of the input signals. The result is then passed to the transmitter 12.

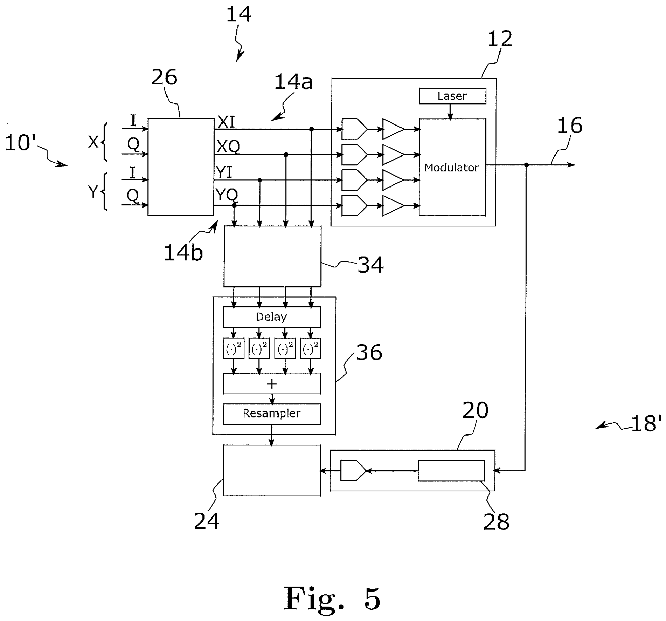

The overall organization and identification of the model representation as well as the generation of the pre-distortion as described above with reference to Equations (1) to (9) is illustrated in additional detail in Fig. 5. The configuration of the optical transmission system 10' and system 18' for determining a model representation correspond to those described above with reference to Figs. 3 and 4, and hence the same reference numerals are employed.

As described above with reference to Equations (4) to (6), the model representation for the optical transmitter 12 may be efficiently determined by means of an ansatz, wherein the ansatz comprises a parameter vector $\theta$ and the step of determining the model representation comprises optimizing for $\theta$. In Fig. 5, the ansatz for the model representation is schematically illustrated with reference numeral 34, and the model for the determination unit 20 with reference number 36. The analysis unit 24 then compares the data signals provided by the determination unit 20, and hence collected from the optical output signal 16, with corresponding input signals 14 submitted to a concatenation of the ansatz 34 for the model representation and the model 36 for the determination unit 20 to determine the optimal parameter vector according to Equation (9).

As illustrated in Fig. 5, the model 36 for the determination unit 20 may comprise a memory-less sample power computer, a delay element and a re-sampler.

The sample power computer models the photo-detector, the delay element reproduces the latency of the feedback loop and the resampler implements the ratio between the sampling rates of the digital-to-analog converters (DACs) in the transmitter 12 and the analog-to-digital converter (ADC) in the determination unit 20. In particular, if the DAC rate is an exact multiple of the ADC rate

$$f_{ADC} = M \cdot f_{DAC}, \tag{10}$$

the resampler is a simple decimator that keeps 1 sample out of $M$. If needed, more accurate models of the determination unit 20 can be employed, for instance to emulate bandwidth limitations or nonlinear distortions.

Using the model of the determination unit 20 shown in Fig. 5 and assuming that condition (10) holds, Equation (9) becomes

$$\hat{\theta} = \arg\min_\theta \sum_{i=0}^{N_r} [r[i] - \|w_\theta[M \cdot i]\|^2]^2, \tag{11}$$

where $\|\cdot\|$ denotes the Euclidean norm of a vector and where, for the sake of notation simplicity, we neglect the latency.

It is worth observing that the identification relies upon the samples at the output of the pre-distortion unit 26 and therefore is unaffected by the actual configuration of the pre-distortion unit. This enables the implementation of an iterative approach to track dynamic changes in the optical transmitter 12, such as due to temperature fluctuations or aging, whereby an updated transmitter model is identified at each iteration and used to pre-distort the desired transmit signal in the next time window.

In the following we consider two special cases of practical importance:

1. Delay identification:

The vector $\theta$ represents the delay of the 4 real components of the transmit signal.

2. Linear combination:

The function $\mathbf{f}_\theta$ is linear in $\theta$.

1. <u>Delay Identification:</u>

This case has two major applications: estimation of the latency of the feedback loop and of the skew among the transmit in-phase and quadrature components I and Q and/or skew among polarizations X and Y.

The estimation of the latency may be a preliminary step for the identification of any other parameter. Before identifying the rest of the transmitter model, the estimated latency may be implemented in the delay element of the feedback receiver model to synchronize $r$ and $s_\theta$.

The skew, in particular between the in-phase and the quadrature components, is a critical impairment in any optical amplitude/phase modulation and its accurate compensation is often desired to enable the transmission of high-order modulation formats.

In both applications, since the summed Euclidean norms, i.e. the power, of $w_\theta$ is, apart from negligible boundary effects, essentially independent of the delays $\theta$, Equation (11) simplifies to

$$\widehat{\boldsymbol{\theta}} = \arg\max_{\boldsymbol{\theta}} \sum_{i=0}^{N_r} r[i] \cdot \|\boldsymbol{w}_{\boldsymbol{\theta}}[M \cdot i]\|^2. \qquad (12)$$

Expressed verbally, Equation (12) indicates that the transmitter model is identified by maximizing the inner product between the sequences of the feedback samples and of the samples obtained by applying the cascade of the transmitter model 34 and the determination unit model 36 to the output of the pre-distortion unit 26. The identification can be implemented as an exhaustive search over a set of candidate parameter vectors. The evaluation of the sum in Equation (12) for each tentative $\theta$ can be efficiently performed by means of Fourier-transform techniques.

The vector parameter gathers the delays of the four baseband components:

$$\boldsymbol{\theta} = \begin{bmatrix} \tau_{XI} & \tau_{XQ} & \tau_{YI} & \tau_{YQ} \end{bmatrix}. \qquad (13)$$

The overall latency is defined as

$$\tau_{r,s} = \frac{\tau_{XI} + \tau_{XQ} + \tau_{YI} + \tau_{YQ}}{4}, \qquad (14)$$

the IQ-skew for the two polarizations is

$$\begin{aligned} \tau_{IQ,X} &= \tau_{XI} - \tau_{XQ} \\ \tau_{IQ,Y} &= \tau_{YI} - \tau_{YQ}, \end{aligned} \qquad (15)$$

and the XY-skew is

$$\tau_{XY} = \frac{\tau_{XI} + \tau_{XQ} - \tau_{YI} - \tau_{YQ}}{2}. \qquad (16)$$

The exhaustive search is performed over a reasonable interval, which depends on the physical properties of transmitter, digital-to-analog converter (DAC), feedback receiver and analog-to-digital converter (ADC), with a reasonable step-size, commensurate with the symbol rate of the modulated signal.

## 2. Linear Combination:

In many practical applications the transmitter can be modelled as the linear combination of a given set of base functions $\mathbf{f}_j \colon \mathbb{R}^{4 \times N_v} \to \mathbb{R}^{4 \times N_v}$ ($j$=0, 1, ..., $L$-1):

$$\mathbf{f}_\theta(v) = \sum_{j=0}^{L-1} \theta_j \mathbf{f}_j(v). \qquad (17)$$

In this case, the parameter vector consists of the coefficients of the linear combination:

$$\boldsymbol{\theta} = \begin{bmatrix} \theta_0 & \theta_1 & \cdots & \theta_{L-1} \end{bmatrix}. \qquad (18)$$

It is worth mentioning that the resulting model can be either linear or nonlinear in the argument $v$, depending on the adopted base functions. Some notable and practically relevant choices include:

- Single-component base functions, each having non-zero projection on only one of the four baseband components,
- Single-component delay functions, which model independent linear filters for the four baseband components,
- Polynomial base functions, which result in a Volterra model.

Using the model of the feedback receiver shown in 5 and assuming Equation (17), Equation (9) becomes

$$\hat{\boldsymbol{\theta}} = \arg\min_\theta CF_\theta(v), \qquad (19)$$

where we introduce the cost function

$$CF_\theta(v) = \sum_{i=0}^{N_r} \left[ r[i] - \left\| \sum_{j=0}^{L-1} \theta_j \mathbf{f}_j(v)[M \cdot i] \right\|^2 \right]^2. \quad (20)$$

The first derivatives of the cost function can be expressed in closed form as

$$\frac{\partial CF_\theta(v)}{\partial \theta_m} = -4 \sum_{i=0}^{N_r} \left[ r[i] - \left\| \sum_{j=0}^{L-1} \theta_j \mathbf{f}_j(v)[M \cdot i] \right\|^2 \right] \mathbf{f}_m(v)[M \cdot i] \sum_{j=0}^{L-1} \theta_j \mathbf{f}_j(v)[M \cdot i] \qquad (21)$$

and can be used to solve Equation (19) numerically using a gradient-based iterative approach.

As explained above with reference to Fig. 4, simplifications result in configurations in which no joint polarization processing of the input signals 14 is required. In these cases, the signal processing factors into independent components for the X and Y polarizations, and the optical transmitter 12 may be regarded as the combination of two independent component transmitter units 12a, 12b for the X and Y polarizations, respectively.

In configurations in which the optical transmitters 12a, 12b for the X and Y polarizations can be assumed to be identical, the ansatz 34 for the model representation may be chosen as a single polarization transmitter and may be used alternatively to identify the two single-polarization transmitters 12a, 12b.

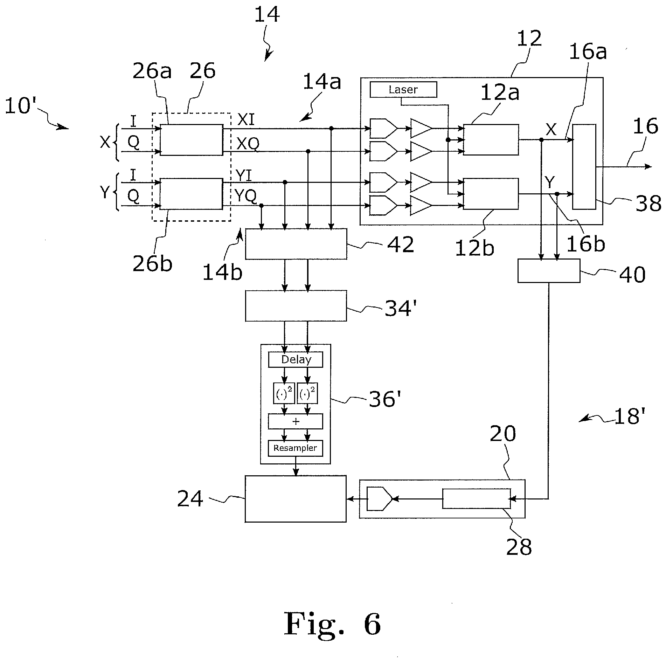

The corresponding configuration of an optical transmission system 10' and system 18' for determining a model representation is shown schematically in Fig. 6. Fig. 6 generally corresponds to Fig. 5, and hence the same reference numerals are used to denote corresponding components. However, the polarization directions X and Y can be treated independently, and hence the optical transmitter 12 can be represented as a combination of otherwise identical optical transmitters 12a, 12b for the polarization directions X and Y, respectively. As can be further taken from Fig. 6, the optical transmitter 12 in addition comprises a combiner 38 to combine the optical output signals 16a, 16b of the optical transmitters 12a, 12b into a common output signal 16.

As can be further taken from Fig. 6, the system 18' for determining the model representation comprises an analog X/Y switch 40 to switch between the output polarization branches and alternatively provide the optical output signals 16a, 16b to the determination unit 20.

The system 18' further comprises a digital X/Y switch 42 that alternatively samples the input signals 14a, 14b of the X and Y polarizations, respectively. The ansatz 34' for the model representation and model 36' for the determination unit 20 generally correspond to the components 34, 36 described above with reference to Fig. 5, but are simplified in that they comprise a single polarization direction only.

The mathematical representation described above with reference to Fig. 5 remains essentially unchanged except for the simplification that one of the two polarization directions is dropped.

The analysis unit 24 determines the optimal model representation for the optical transmitters 12a, 12b by comparing the output of the concatenation of the ansatz 34' for the model representation and model 36' for the determination unit with the sample output measured by the determination unit 20 for each polarization sequentially, and adapting the parameters $\Theta$ of the ansatz 34' so that the match becomes maximum. The operations for the two polarizations can also be performed in parallel by doubling the units of system 18'. If it is justified to assume that both transmitters 12a and 12b behave almost identically, it is possible to determine the mode representation for one polarization only and to apply this model representation to both polarizations. Preferably, the approach offers the possibility to determine different parameter sets for the different polarizations planes although the same ansatz is used.

In the configuration of Fig. 6 in which the polarization directions are independent, the predistortion unit 26 comprises two identical sub-units 26a, 26b, one for each polarization direction X, Y.

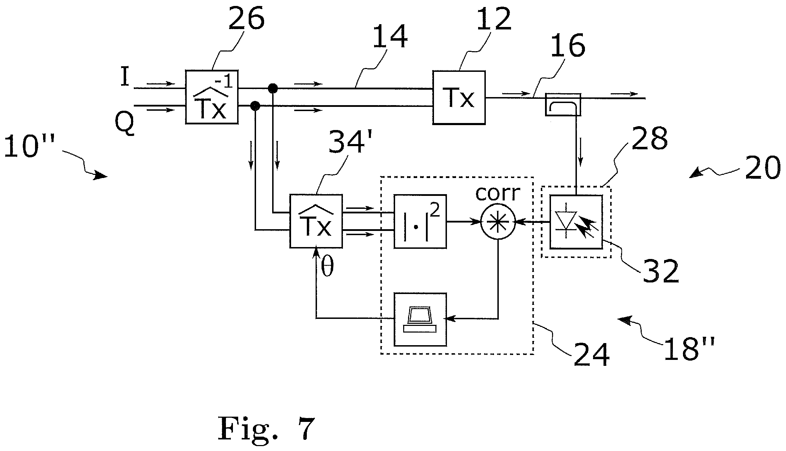

As illustrated in Fig. 7, this parameter optimization technique effectively corresponds to an optical transmission system 10" with a single polarization direction and two quadrature components I and Q. Corresponding components again share corresponding reference signs. Based on the determination of the model representation for the optical transmitter 12, the pre-distortion unit 26 may be implemented as an inverse or approximate inverse of the optical transmitter 12. In the configuration represented in Fig. 7, the optical transmitter 12 is assumed to introduce only skew/delay, and hence the analysis unit 24 may determine the representation for the pre-distortion unit 26 based on a correlation criterion, as described above with reference to Equation (12).

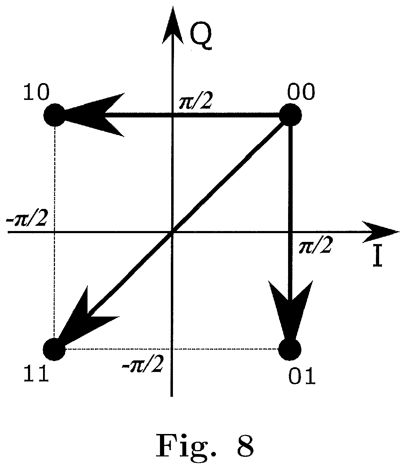

A simplified optimization technique with reduced degree of complexity will now be explained in greater detail with reference to Figs. 8 to 10 for the special case in which the optical transmitter 12 is essentially limited to delay/skew between the in-phase (I) and quadrature (Q) part of the optical signal. Although the technique is described here with respect to quadrature phase shift keying (QPSK), it should be mentioned here that the technique can also be used for different modulation formats.

Fig. 8 schematically illustrates a constellation diagram of a QPSK signal with transitions from the 00 constellation point in an ideal/noiseless case without skew.

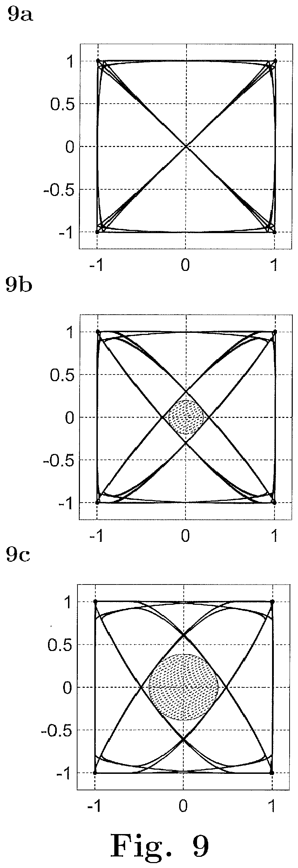

Figs. 9a to 9c show corresponding constellation diagrams in the presence of skew, wherein the magnitude of the skew increases from Fig. 9a (negligible skew) to Fig. 9b (medium level of skew) to Fig. 9c (substantial level of skew).

As can be taken from Figs. 9a to 9c, in the presence of skew the transition paths from one symbol to its point symmetric counterpart no longer go through the center point of the constellation diagram. In particular, none of the transitions traverses the shaded circular areas in Figures 9b and 9c, and the diameter of these areas increases with increasing magnitude of the skew. As a consequence, the power measured over time will never vanish, and the minimum power detected by the determination unit 20 increases with increasing level of skew.

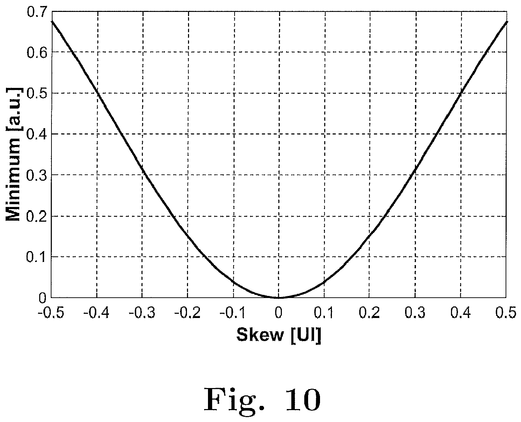

Fig. 10 schematically illustrates the minimum instantaneous power detected versus skew of the in-phase and quadrature components.

Minimizing the minimum instantaneous power detected by the determination unit 20 can hence be a suitable technique for adapting the model representation for the optical transmitter 12 in case of skew. Advantageously, to detect the minimum power of the transmit signal not only can the determination unit 20 operate at a lower sampling rate, but it can also run asynchronously with respect to the optical transmitter 12.

As an advantage, a combined processing of the input signals 14 and the output signals 16 is not necessary in the technique described with reference to Figs. 8 to 10. The model representation may be solely determined from an analysis of the output intensity of the optical transmitter 12, which reduces the complexity of the signal processing.

In many practical applications, signals may be affected by noise that has been neglected in the above description for the sake of easier understanding. Although the noise level in the configurations considered here is usually quite small and its influence might even be neglected in many configurations, techniques for determining the minimum amplitude or power level in the presence of noise will now be explained. As will become apparent in the following, the term "determining the minimum" should be understood in a broad sense in the presence of noise.

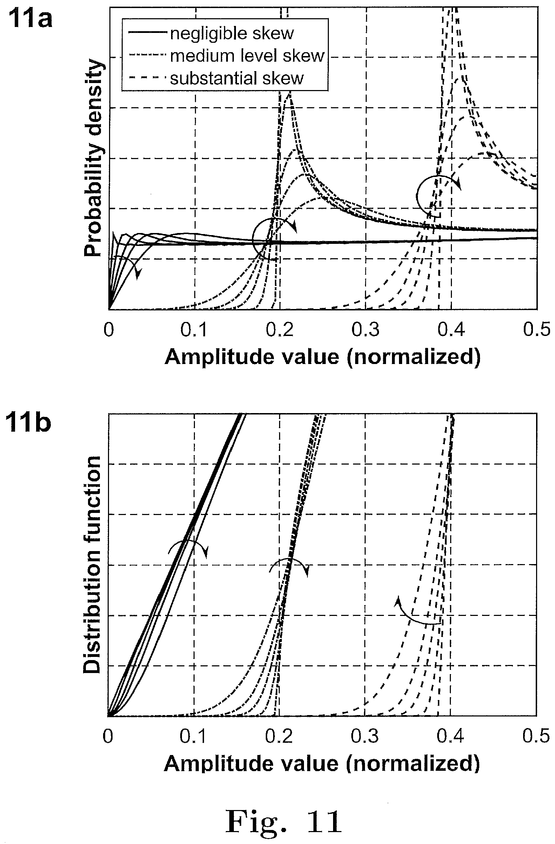

Fig. 11 visualizes the probability distribution of the amplitude values for different skew values and for various noise levels. In detail, the upper plot Fig. 11a shows the probability density function (pdf) of the amplitude values for negligible skew, medium-level skew and substantial skew. All curves relating to the same skew level but different noise levels are displayed with the same line style. Solid curves show the pdf for vanishing skew, whereas dash-dotted curves indicate that there is a medium level skew and dashed curves refer to substantial skew. Among the curves relating to the same skew level, the curve with the steepest raising edge illustrates the probability density for negligible noise. Furthermore, the slope of the curves decreases with increasing noise. Bended arrows point in the direction of increasing noise (to be interpreted as a kind of rotation of the curves). The lower plot Fig. 11b shows the corresponding cumulative probability distribution.

With noise and an infinitely long measurement period, there is no range of amplitude values wherein the pdf vanishes completely. Defining a threshold and looking for amplitude values at which the probability density exceeds the threshold value is a suitable way for determining the minimum value. In particular, the "minimum value" should be understood as the smallest amplitude value at which the probability density exceeds a predefined threshold. As illustrated in Fig. 11, the threshold value is preferably a function of the noise level. The noise level can be determined from amplitude values determined for the same transmitted symbol or from amplitude values determined for symbols with identical amplitude. Suitable symbols might either be taken from a stream of data to be transmitted or from a sequence of symbols generated for this purpose. In another embodiment, the raising edge is approximated by a linear function and the skew is then determined from the slope and/or the intersection of this linear function with the y-axis or any other intersection.

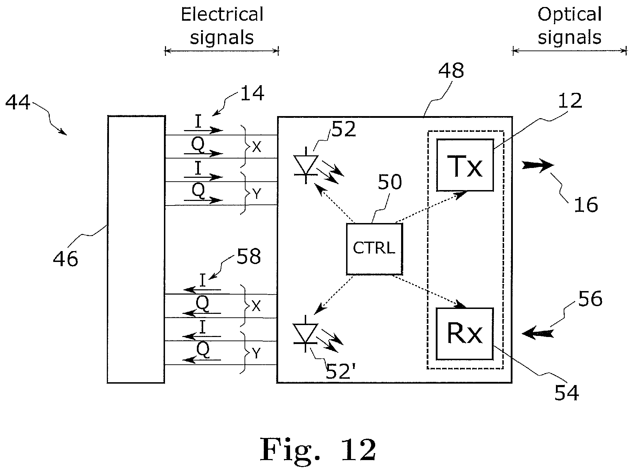

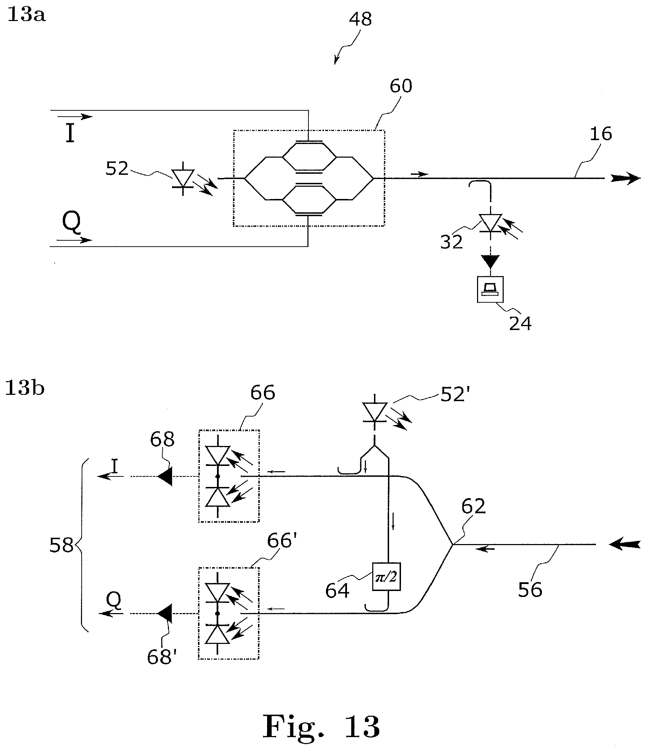

It is an advantage of the techniques according to the present disclosure that they can be implemented and integrated into a pluggable module of an optical transmitter card, as will now be described with reference to Figures 12 and 13.

An example for an optical transceiver card 44 in which the techniques according to the present disclosure may be employed is schematically illustrated in Fig. 12.

The optical transceiver card 44 comprises a digital signal processing unit 46 communicatively connected to a pluggable optical unit 48.

The digital signal processing unit 46 supplies electrical data signals 14 corresponding to in-phase (I) and quadrature (Q) components of optical signals of two orthogonal polarization directions X, Y to the pluggable optical unit 48. The pluggable optical unit 48 comprises a controller unit 50 for setting and controlling internal parameters. By means of optical modulators and an optical light source 52, such as a laser light source or a LED, the received input signals 14 are converted into analog optical signals 16. The pluggable optical unit 48 may hence implement an optical transmitter 12 as described above with reference to Figs. 1 to 7, and may generate optical output signals 16 that can be supplied to an optical network (not shown).

The optical transceiver card 44 also acts as an optical signal receiver. In particular, the pluggable optical unit 48 comprises an optical receiver unit 54 for receiving analog optical signals 56, such as signals from an optical network node. The pluggable optical unit 48 may coherently detect the incoming optical signals 56, such as by means of a light source 52' that generally corresponds to the light source 52. This light source 52' may serve as a local oscillator that is mixed with the received optical signals 56 in order to retrieve two orthogonal (in-phase and quadrature) signal components. The resulting electrical output signals may correspond to in-phase (I) and quadrature (Q) components in two orthogonal polarization directions X and Y, and may be provided as input signals 58 to the digital signal processing unit 46 for analysis and/or signal processing. Instead of using two independent light sources 52 and 52' for the transmit and the receive direction, the pluggable optical unit 48 may generate transmit and receive light sources by splitting a single source using a suitable splitting ratio.

An example for an optical output path that may be implemented in the pluggable optical unit 48 is shown in additional detail in the schematic illustration of Fig. 13a for one of the two polarizations. The second polarization may be processed in the same way.

As can be taken from Fig. 13a, the pluggable optical unit 48 comprises an IQ modulation unit 60 to generate the optical output signals 16 from the incoming electrical I/Q components employing the laser diode 52. As further illustrated in Fig. 13a, the pluggable optical unit 48 may further incorporate an intensity photo-detector 32 to tap a subsequence of the optical output signals 16 and determine an intensity of the subsequence of output signals 16. For instance, the I/Q modulation unit 60 may comprise a Mach-Zehnder modulator, and the intensity photo-detector 32 may monitor the output power of the Mach-Zehnder modulator.

Based on the determined intensity, the analysis unit 24 may determine a model representation for the optical transmitter 12 as described above with reference to Figs. 1 to 10. The analysis unit 24 may be incorporated into the controller unit 50 of the pluggable optical unit 48.

In particular, in order to implement the techniques described above with reference to Figs. 8 to 10 a combined processing of the input signals 14 and the feedback signals 16 is not necessary. In this case, the controller unit 50 may conveniently incorporate the logic for the analysis unit 24. In other examples, the analysis unit 24 may be incorporated into the digital signal processing unit 46, or may be a separate unit.

Based on the model representation determined by the analysis unit 24, a pre-distortion unit may be implemented as described above with reference to Figs. 1 to 10, and may be incorporated into the pluggable optical unit 48 or digital signal processing unit 46.

Fig. 13b is a schematic illustration of an optical input path of the pluggable optical unit 48 for a single polarization direction. The input path for the second (orthogonal) polarization direction may be identical.

The analog optical input signals 56 are split into two parts that are mixed with the light emitted by a light source 52' acting as a local oscillator. In one of the branches, the light from light source 52' is shifted by a phase shifter 64. Thus, in-phase (I) and quadrature (Q) components are obtained from each optical signal. The resulting I and Q components are each submitted to balanced receivers 66, 66' for optical-to-electrical conversion, and the resulting electrical signals are amplified by electrical amplifiers 68, 68' to provide the IQ electrical input signals 58 that are subsequently submitted to the digital signal processing unit 46.

In summary, information transmitted in each polarization is encoded in phase or in phase and amplitude (intensity/power) in the presented embodiments. Just knowing the amplitude does not allow to decode the optical signals and to derive the complete information. In particular with respect to digital data signals, a detected value of said quantity does not allow to unambiguously determine the symbol transmitted by the transmitter when the intensity value is determined. Nevertheless, it has been found that knowledge of the amplitude is sufficient for determining a model representation of the transmitter. In other words, the model representation is determined from a quantity that is not sufficient to retrieve the complete information encoded in an optical signal.

The description of the embodiments and the Figures merely serve to illustrate the invention and the beneficial effects associated therewith, but should not be understood to imply any limitation. The scope of the invention is to be determined by means of the appended claims.

Reference Signs

| | |
|---|---|
| 10, 10', 10" | optical transmission system |
| 12 | optical transmitter |
| 12a, 12b | optical transmitters |
| 14 | input signals |
| 14a, 14b | input polarization directions |
| 16 | optical output signals |
| 16a, 16b | optical output signals |
| 18, 18', 18" | system for determining a model representation |
| 20 | determination unit |
| 22 | test sequence |
| 24 | analysis unit |
| 26 | pre-distortion unit |
| 26a, 26b | pre-distortion units |
| 28 | feedback receiver |
| 30 | control line |
| 32 | intensity photo-detector |
| 34, 34' | ansatz for the model representation |
| 36, 36' | model for determination unit 20 |
| 38 | combiner |
| 40 | selector unit, analog X/Y switch |
| 42 | digital X/Y switch |
| 44 | optical transceiver card |
| 46 | digital signal processing unit |
| 48 | pluggable optical unit |
| 50 | controller unit |
| 52, 52' | light source |
| 54 | optical receiver unit |
| 56 | analog optical input signals |
| 58 | electrical input signals |
| 60 | IQ modulation unit |
| 62 | optical splitter |
| 64 | phase shifter |
| 66, 66' | balanced receivers |
| 68, 68' | electrical amplifiers |

**Claims**

1. A method for determining a model representation (34, 34') for an optical transmitter (12; 12a, 12b), comprising:

   determining a quantity of a subsequence of output signals (16; 16a, 16b) of an optical transmitter (12; 12a, 12b), the output signals (16; 16a, 16b) being emitted in response to a sequence of input signals (14; 14a, 14b) provided to the optical transmitter (12; 12a, 12b); and
   determining a model representation (34, 34') for the optical transmitter (12; 12a, 12b) based on the determined quantity;
   wherein the quantity only represents a part of the information encoded in the subsequence of the output signals (16, 16a, 16b).

2. The method according to claim 1, wherein the transmitter encodes information transmitted in at least one polarization either in phase or in a combination of amplitude and phase.

3. The method according to any of the preceding claims, wherein the quantity pertains to a power or an intensity of the subsequence of output signals (16; 16a, 16b).

4. The method according to claim 3, wherein the only physical parameter of the output signals (16; 16a; 16b) used for determining the model representation (34, 34') is the determined power or intensity, respectively.

5. The method according to any of the preceding claims, wherein the model representation (34, 34') is not based on determining polarization information and/or phase information of the output signals (16; 16a, 16b).

6. The method according to any of the preceding claims, wherein the model representation (34, 34') models a skew and/or a delay of the input signals (14; 14a, 14b).

7. The method according to any of the preceding claims, wherein determining the model representation comprises:

   providing an ansatz for a model representation (34, 34'), the ansatz comprising at least one parameter, and determining the at least one parameter based on the determined quantity.

8. The method according to any of the preceding claims, further comprising:

   determining a pre-distortion map (26; 26a, 26b) from the model representation (34, 34').

9. The method according to claim 8, further comprising:

   submitting the input signals (14; 14a, 14b) to the pre-distortion map (26; 26a, 26b) prior to the optical transmitter (12; 12a, 12b); and/ or
   submitting output signals of the pre-distortion map (26; 26a, 26b) to the optical transmitter (12; 12a, 12b).

10. The method according to claim 9, comprising:

    adjusting the model representation (34, 34') and/or the pre-distortion map (26; 26a, 26b) based on output signals (16; 16a, 16b) of the optical transmitter (12; 12a, 12b).

11. The method according to any of the preceding claims, wherein the sequence of input signals (14; 14a, 14b) comprises signals of a plurality of polarization states (X, Y), and determining a model representation (34, 34') for the optical transmitter (12; 12a, 12b) comprises determining a first model representation (34, 34') corresponding to a first polarization state (X, Y), and determining a second model representation (34, 34') corresponding to a second polarization state (X, Y) different from the first polarization state (X, Y).

12. A computer program comprising computer-readable instructions that are adapted to implement, when processed on a computer, a method according to any of the preceding claims.

13. A system (18,18', 18") for determining a model representation (34, 34') for an optical transmitter (12; 12a, 12b), comprising:

a determination unit (20) adapted to determine a quantity of a subsequence of output signals (16; 16a, 16b) of an optical transmitter (12; 12a, 12b), the output signals (16; 16a, 16b) being emitted in response to a sequence of input signals (14; 14a, 14b) provided to the optical transmitter (12; 12a, 12b); and

an analysis unit (24) adapted to determine a model representation (34, 34') for the optical transmitter (12; 12a, 12b) from the determined quantity;

wherein the quantity only represents a part of the information encoded in the subsequence of the output signals (16, 16a, 16b).

14. The system (18, 18', 18") according to claim 13, wherein the analysis unit (24) is adapted to determine a pre-distortion map (26; 26a, 26b) from the model representation (34, 34').

15. The system (18, 18', 18") according to claim 14, further comprising
a pre-distortion unit (26; 26a, 26b) upstream of the optical transmitter (12; 12a, 12b), wherein the pre-distortion unit (26; 26a, 26b) implements the pre-distortion map.

Fig. 1

Determining an intensity of a subsequence of output signals of an optical transmitter, the output signals being emitted in response to a sequence of input signals provided to the optial transmitter ⟍ S10

Determining a model representation for the optical transmitter based on the determined intensity ⟍ S12

Fig. 2

Fig. 3

Fig. 4

Fig. 5

**Fig. 6**

Fig. 7

EP 3 457 594 A1

Fig. 8

9a

9b

9c

Fig. 9

Fig. 10

**11a**

**11b**

Fig. 11

Electrical
signals

Optical
signals

Fig. 12

13a

13b

Fig. 13

Europäisches
Patentamt

European
Patent Office

Office européen
des brevets

# EUROPEAN SEARCH REPORT

Application Number

EP 17 19 1040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/312290 A1 (BEELER MICHAEL [US] ET AL) 22 December 2011 (2011-12-22) | 1,2,5-13 | INV. H04B10/2507 H04B10/58 |
| A | * paragraphs [0008] - [0010]; figure 1 * * paragraphs [0033] - [0037] * | 3,4 | |
| A | WO 2016/033266 A1 (ALCATEL LUCENT [FR]) 3 March 2016 (2016-03-03) * page 9, line 1 - page 10, line 21; figure 5 * | 1-15 | |
| A | KHANNA GINNI ET AL: "A Robust Adaptive Pre-Distortion Method for Optical Communication Transmitters", IEEE PHOTONICS TECHNOLOGY LETTERS, IEEE SERVICE CENTER, PISCATAWAY, NJ, US, vol. 28, no. 7, 1 April 2016 (2016-04-01), pages 752-755, XP011600487, ISSN: 1041-1135, DOI: 10.1109/LPT.2015.2509158 [retrieved on 2016-02-24] * 1. Introduction IV. experimental resutls and discussion V. Conclusion and future work; figure 2 * | 1-15 | |

TECHNICAL FIELDS
SEARCHED (IPC)

H04B

The present search report has been drawn up for all claims

| Place of search | Date of completion of the search | Examiner |
|---|---|---|
| Munich | 14 March 2018 | De Vries, Jane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 1040

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2018

| Patent document cited in search report | Publication date | Patent family member(s) | | Publication date |
|---|---|---|---|---|
| US 2011312290 A1 | 22-12-2011 | EP | 2724474 A1 | 30-04-2014 |
| | | US | 2011312290 A1 | 22-12-2011 |
| | | WO | 2013012912 A1 | 24-01-2013 |
| WO 2016033266 A1 | 03-03-2016 | US | 2016065311 A1 | 03-03-2016 |
| | | WO | 2016033266 A1 | 03-03-2016 |

EPO FORM P0459

For more details about this annex : see Official Journal of the European Patent Office, No. 12/82

**EP 3 457 594 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. NAPOLI et al.** Novel DAC Digital Pre-Emphasis Algorithm for Next-Generation Flexible Optical Transponders. *Proceedings of the 2015 Optical Fiber Communication Conference (OFC 2015),* 22 March 2015

- **C.R. FLUDGER.** Low-Cost Transmitter Self-Calibration of Time Delay and Frequency Response for High Band-Rate QAM Transceivers. *Proceedings of the 2017 Optical Fiber Communication Conference (OFC 2017),* 20170319
- **G. KHANNA et al.** A Robust Adaptive Pre-Distortion Method for Optical Communication Transmitters. *IEEE Photonics Technology Letters,* April 2015, vol. 28 (7), 752-755